# EUROPÄISCHE PATENTSCHRIFT

(11) **EP 3 215 809 B1**
(45) Veröffentlichungstag und Bekanntmachung des Hinweises auf die Patenterteilung: **12.12.2018**
(21) Anmeldenummer: 15787899.2
(22) Anmeldetag: 27.10.2015
(51) Int. Cl.: G01C 21/36, G03B 17/56, G08B 13/196, G06T 7/00

(54) **VERFAHREN ZUR AUFNAHME VON REFERENZDATEN UND VORRICHTUNG ZUR AUFNAHME VON REFERENZDATEN**
METHOD FOR RECORDING REFERENCE DATA AND DEVICE FOR RECORDING REFERENCE DATA
PROCÉDÉ DE RÉCEPTION DE DONNÉES DE RÉFÉRENCE ET DISPOSITIF DE RÉCEPTION DE DONNÉES DE RÉFÉRENCE

(30) Priorität: 08.11.2014 DE 102014016550
(43) Veröffentlichungstag der Anmeldung: 13.09.2017
(73) Patentinhaber: Audi AG, 85045 Ingolstadt (DE)
(72) Erfinder: MÄHLISCH, Mirko, 85117 Eitensheim (DE); WITTENZELLNER, Marina, 85128 Nassenfels (DE); KUBERTSCHAK, Tim, 85055 Ingolstadt (DE)
(74) Vertreter: Thielmann, Frank
(86) Internationale Anmeldenummer: PCT/EP2015/002126
(87) Internationale Veröffentlichungsnummer: WO 2016/070966

(56) Entgegenhaltungen:
- DE-A1-102009 045 496
- JP-A- 2007 261 463
- US-A1- 2003 025 791
- US-A1- 2009 140 881
- US-A1- 2013 176 434

## Beschreibung

Die Erfindung betrifft ein Verfahren zur Aufnahme von wenigstens ein Objekt und/oder eine bestimmte Umgebung um das oder ein Objekt beschreibenden Referenzdaten, welche Referenzdaten zum Abgleich mit von wenigstens einem kraftfahrzeugseitigen Assistenzsystem aufgenommenen, wenigstens ein Objekt und/oder eine bestimmte Umgebung um das oder ein Objekt beschreibenden Daten vorgesehen sind. Entsprechende Verfahren sind beispielsweise aus den Dokumenten JP2007261463, US20090140881 und DE102009045496 bekannt.

Aus den Dokumenten US20130176434 und US20030025791 sind Halterungseinrichtungen zur Lagerung einer Bildaufnahmeeinrichtung bekannt.

Die Aufnahme entsprechender Referenzdaten ist im Bereich der Kraftfahrzeugtechnik von besonderer Bedeutung, um die Funktionalität kraftfahrzeugseitiger Assistenzsysteme, worunter insbesondere Fahrerassistenzsysteme bzw. Sicherheitssysteme, welche z. B. im Zusammenhang mit der Realisierung einer zumindest teilautomatisierten Fahrzeugführung relevant sind, zu verstehen sind, insbesondere im Hinblick auf Genauigkeit und Zuverlässigkeit, zu überprüfen. Die Überprüfung basiert im Wesentlichen darauf, entsprechende assistenzsystemseitig aufgenommene Daten mit entsprechenden Referenzdaten abzugleichen. Derart können Rückschlüsse auf die Güte, d. h. insbesondere auf die Aussagekraft, Genauigkeit und Zuverlässigkeit, der assistenzsystemseitig aufgenommenen Daten gezogen werden.

Die Aufnahme entsprechender Referenzdaten erfolgt bis dato über vergleichsweise aufwändige Ansätze, insbesondere basierend auf einer hochgenauen Umfeldvermessung sowie einer Positionsbestimmung von in einem erfassten Umfeld befindlichen Objekten. Hierbei werden große Datenmengen erzeugt, deren Auswertung bzw. Verarbeitung komplex ist und insofern fehleranfällig sein kann.

Der Erfindung liegt die Aufgabe zugrunde, ein demgegenüber verbessertes Verfahren zur Aufnahme von wenigstens ein Objekt und/oder eine bestimmte Umgebung um das oder ein Objekt beschreibenden Referenzdaten, welche Referenzdaten zum Abgleich mit von wenigstens einem kraftfahrzeugseitigen Assistenzsystem aufgenommenen, wenigstens ein Objekt und/oder eine bestimmte Umgebung um das oder ein Objekt beschreibenden Daten vorgesehen sind, anzugeben.

Die Aufgabe wird durch ein Verfahren der eingangs genannten Art gemäß Anspruch 1 gelöst, welches sich dadurch auszeichnet, dass die Referenzdaten mittels wenigstens einer Bildaufnahmeeinrichtung aus der Vogelperspektive aufgenommen werden.

Das hierin beschriebene Verfahren zeichnet sich zunächst dadurch aus, dass zur Aufnahme der Referenzdaten eine Bildaufnahmeeinrichtung verwendet wird, welche eine bildbasierte Aufnahme entsprechender Referenzdaten ermöglicht. Unter einer Bildaufnahmeeinrichtung ist insbesondere eine Kamera, z. B. eine CCD-Kamera oder dergleichen, zu verstehen. Derart ist bereits durch die verfahrensgemäß verwendete Bildaufnahmeeinrichtung eine Vereinfachung der Aufnahme entsprechender Referenzdaten gegeben, da hierbei auf übliche Bild- und/oder Videokameras zurückgegriffen werden kann.

Das beschriebene Verfahren zeichnet sich im Weiteren durch eine besondere Art der Aufnahme entsprechender Referenzdaten aus. Die Referenzdaten werden verfahrensgemäß mit wenigstens einer Bildaufnahmeeinrichtung aus der Vogelperspektive aufgenommen. Hierunter ist zu verstehen, dass die Referenzdaten aus einer gegenüber der aufzunehmenden Szenerie, d. h. den aufzunehmenden Objekten bzw. dem aufzunehmenden Umfeld, erhöhten Aufnahmeposition aufgenommen werden. Die erhöhte Aufnahmeposition ergibt sich typischerweise dadurch, dass die Bildaufnahmeeinrichtung zur Aufnahme der Referenzdaten in einer Position deutlich oberhalb der aufzunehmenden Objekte bzw. der aufzunehmenden Umgebung befindlich ist. Die Aufnahmeposition, d. h. die Position der Bildaufnahmeeinrichtung, aus welcher die Referenzdaten verfahrensgemäß tatsächlich aufgenommen werden, ist also gegenüber den aufzunehmenden Objekten respektive der aufzunehmenden Umgebung derart erhöht, dass eine für die Vogelperspektive charakteristische schiefe Parallelprojektion gegeben ist, wie sie beispielsweise zu einer veranschaulichten Darstellung von Karten- oder Planmaterial bekannt ist. Die Aufnahme der Referenzdaten aus der Vogelperspektive ermöglicht eine hervorragende Sicht auf die aufzunehmende Szenerie, d. h. die aufzunehmenden Objekte respektive der aufzunehmende Umgebung.

In Abhängigkeit der konkreten Ausrichtung und Positionierung der Bildaufnahmeeinrichtung relativ zu den aufzunehmenden Objekten bzw. der aufzunehmenden Umgebung können unterschiedlich große Aufnahmebereiche erfasst und in entsprechende Referenzdaten umgesetzt werden. Selbstverständlich sind in diesem Zusammenhang auch diverse Aufnahmeparameter, insbesondere die Auflösung und horizontale bzw. vertikale Öffnungswinkel, der verwendeten Bildaufnahmeeinrichtung von Bedeutung, welche sonach ebenso Einfluss auf den tatsächlichen Aufnahmebereich und die hieraus umsetzbaren Referenzdaten haben.

Nochmals sei erwähnt, dass es sich bei entsprechenden Referenzdaten um solche Daten, d. h. insbesondere solche Bilddaten, handelt, welche zum Abgleich mit von wenigstens einem kraftfahrzeugseitigen Assistenzsystem aufgenommenen Daten verwendet werden. Bei entsprechenden Assistenzsystemen handelt es sich insbesondere um Fahrerassistenzsysteme bzw. Sicherheitssysteme, d. h. z. B. Systeme der integralen Sicherheit. Die Assistenzsysteme können insbesondere im Zusammenhang mit einer zumindest teilautomatisierten Fahrzeugführung relevant sein. Sowohl die Referenzdaten als auch die assistenzsystemseitig, d. h. die über wenigstens einem kraftfahrzeugseitigen Assistenzsystem zugeordnete kraftfahrzeugseitige Aufnahmeeinrichtungen, aufgenommenen Daten beinhalten bzw. beschreiben typischerweise Objekte bzw. eine Umgebung, in welcher sich entsprechende Objekte befinden können. Unter Objekten sind sowohl statische, d. h. nicht bewegliche Objekte, wie z. B. nicht bewegliche Bauwerke, Pflanzen etc., allgemein nicht bewegliche Bestandteile einer bestimmten Infrastruktur, als auch dynamische, d. h. bewegliche Objekte, wie z. B. Menschen, Tiere, Fahrzeuge, insbesondere Kraftfahrzeuge, oder sonstige bewegliche Verkehrsteilnehmer, zu verstehen.

Die Aufnahme der Referenzdaten aus der Vogelperspektive ist dadurch realisiert, dass die Referenzdaten von einer Aufnahmeposition an, in oder auf einem Bauwerk aufgenommen werden. Unter entsprechenden Bauwerken sind sowohl unbewegliche Bauwerke, wie z. B. Brücken, Gebäude, Türme, etc., als auch bewegliche Bauwerke, wie z. B. auf einem bzw. relativ zu einem Untergrund bewegbare Gerüste, zu verstehen. Verfahrensgemäß kann eine entsprechende Bildaufnahmeeinrichtung sonach an, in oder auf einem entsprechenden Bauwerk bzw. Bauwerksteil positioniert werden, um die beschriebene Aufnahme von Referenzdaten aus der Vogelperspektive vorzunehmen.

Konkret ist es z. B. möglich, dass die Referenzdaten von einer Aufnahmeposition an, in oder auf einem Gebäude aufgenommen werden, wobei eine Aufnahmeposition an, in oder auf einem oberhalb eines Erdgeschosses befindlichen Gebäudebereich, beispielsweise eine Aufnahmeposition von einem Balkon oder einem Dach, gewählt wird. Unter Gebäuden als Untergruppe der genannten Bauwerke sind z. B. Wohngebäude, Gewerbegebäude, Industriegebäude sowie sonstige Gebäude, wie z. B. Türme, zu verstehen. Die Aufnahmeposition kann dabei innerhalb oder außerhalb eines entsprechenden Gebäudes sein. Die Referenzdaten können sonach z. B. durch ein, gegebenenfalls geöffnetes, Fenster oder sonstigen vergleichbaren baulichen Durchbruch, von einem Balkon oder von einem Dach eines entsprechenden Gebäudes aufgenommen werden.

Gemäß der Erfindung werden die Referenzdaten vermittels einer an oder auf einer Halterungseinrichtung gelagerten Bildaufnahmeeinrichtung aufgenommen. Die verfahrensgemäß zur Aufnahme der Referenzdaten verwendete Bildaufnahmeeinrichtung wird sonach zumindest während der Aufnahme der Referenzdaten an einer entsprechenden Halterungseinrichtung gelagert. Die einrichtung dient allgemein einer stabilen Ausrichtung bzw. Positionierung der verfahrensgemäß zur Aufnahme entsprechender Referenzdaten verwendeten Bildaufnahmeeinrichtung. Die Halterungseinrichtung wird an, in oder auf einem Bauwerk angeordnet, d. h. ausgerichtet bzw. positioniert, gegebenenfalls auch befestigt.

Gemäß der Erfindung umfasst die verfahrensgemäß verwendete Halterungseinrichtung ein auf, insbesondere rollenförmigen, Bewegungsmitteln relativ zu einem Untergrund bewegbar gelagertes Grundgerüst und wenigstens einen, typischerweise zwischen einer von dem Grundgerüst (im Vergleich zu einer eingeschwenkten Stellung weiter) beabstandet angeordneten ausgeschwenkten Stellung und einer an dem oder innerhalb des Grundgerüsts angeordneten eingeschwenkten Stellung, schwenkbar relativ zu dem Grundgerüst gelagerten Halterungsarm mit wenigstens einem eine Lagerstelle für die Bildaufnahmeeinrichtung bildenden Lagerabschnitt, wobei an dem Haltungsarm wenigstens ein Abstützelement, insbesondere in Form eines Standfußes oder umfassend einen Standfuß, zum Abstützen des relativ zu dem Grundgerüst verschwenkten Halterungsarms auf dem Untergrund befestigt ist. Die Halterungseinrichtung kann ferner wenigstens ein, typischerweise zwischen einer von dem Grundgerüst (im Vergleich zu einer eingeschwenkten Stellung weiter) beabstandet angeordneten ausgeschwenkten und einer an oder innerhalb des Grundgerüsts angeordneten eingeschwenkten Stellung, schwenkbar an dem Grundgerüst gelagertes Ablageelement zur Ablage eines mobilen Endgeräts, insbesondere eines Laptops, Smartphones öder Tablets, nach Art eines Klapptisches umfassen.

Insbesondere ein entsprechender Halterungsarm kann, z. B. durch eine segmentierte oder teleskopartige Ausführung, verlängerbar ausgeführt sein, was zweckmäßig sein kann, um die Bildaufnahmeeinrichtung möglichst nahe an einen Randbereich eines Gebäudes bzw. Gebäudeteils, z. B. einen Randbereich eines Balkons oder ein Dachs, zu positionieren, ohne einen Bediener durch Annähern an einen entsprechenden Randbereich in Gefahr zu bringen.

Die oder eine entsprechende Halterungseinrichtung kann, gegebenenfalls zusätzlich, eine an dem oder einem auf, insbesondere rollenförmigen, Bewegungsmitteln relativ zu einem Untergrund bewegbar gelagerten Grundgerüst befestigte Justiereinrichtung zur Justierung, insbesondere Feinjustierung, der Ausrichtung und/oder der Position der an dem oder einem schwenkbar relativ zu dem Grundgerüst gelagerten Halterungsarm mit wenigstens einem eine Lagerstelle für die Bildaufnahmeeinrichtung bildenden Lagerabschnitt gelagerten Bildaufnahmeeinrichtung, eine an dem Grundgerüst befestigte Bildverarbeitungseinrichtung zur Verarbeitung der von der Bildaufnahmeeinrichtung aufgenommenen Daten, und einen an dem Grundgerüst befestigten, insbesondere wiederaufladbaren, elektrischen Energiespeicher zur elektrischen Versorgung der Bildaufnahmeeinrichtung und/oder der oder einer Bildverarbeitungseinrichtung und/oder eines mobilen Endgeräts, insbesondere eines Laptops, Smartphones oder eines Tablets, allgemein eines Computers, umfassen. Die Halterungseinrichtung kann sonach sämtliche für die Aufnahme, Verarbeitung und Ausgabe entsprechender Referenzdaten erforderliche Einrichtungen sowie in Form eines entsprechenden elektrischen Energiespeichers (Batterie) eine diesen zuordenbare oder zugeordnete Energiequelle beinhalten und sonach eine (weitgehend) autarke Funktionseinheit darstellen.

Zweckmäßig ist eine verfahrensgemäß verwendete Halterungseinrichtung aus lösbar miteinander verbindbaren oder verbundenen Standardbauteilen, wie z. B. Streben- oder Profilbauteilen, aufgebaut, was Vorteile im Hinblick auf Montage, Handhabung und Transport der Halterungseinrichtung bedeutet. Gleichermaßen können derart die Kosten für die Halterungseinrichtung vergleichsweise gering gehalten werden.

In einem nicht zu der beanspruchten Erfindung gehörenden Verfahren ist es alternativ oder ergänzend zu der Verwendung einer entsprechenden Halterungseinrichtung zur Lagerung der Bildaufnahmeeinrichtung möglich, dass Referenzdaten von einer Aufnahmeposition an einem bemannten oder unbemannten Flugobjekt, insbesondere einer Drohne oder einem Hubschrauber, aufgenommen werden. Es kann also ein Flugobjekt verwendet werden, an welchem wenigstens eine Bildaufnahmeeinrichtung anbringbar oder angebracht bzw. in welchem von Haus aus wenigstens eine Bildaufnahmeeinrichtung integriert ist. Beispiele für verwendbare unbemannte Flugobjekte sind z. B. Drohnen, Modellluftfahrzeuge, insbesondere Modellflugzeuge, etc. Entsprechende unbemannte Flugobjekte können gegebenenfalls ferngesteuert werden. Beispiele bemannter Bildaufnahmeeinrichtungen sind z. B. Gleitschirme, Hubschrauber, Segelflugzeuge, Heißluftballone, etc.

Im Rahmen des erfindungsgemäßen Verfahrens können verschiedene Markerelemente vorgesehen und somit aufgenommen werden, was im Weiteren näher erläutert wird. Verfahrensgemäß können an jeweiligen aufzunehmenden oder aufgenommenen Objekten angebrachte Markerelemente vorgesehen und somit aufgenommen werden. Mithin kann wenigstens ein aufzunehmendes oder aufgenommenes Objekt mit wenigstens einem Markerelement versehen werden oder worden sein, welches Markerelement von der oder einer Bildaufnahmeeinrichtung aufgenommen wird. Es ist also möglich, aufzunehmende statische bzw. insbesondere dynamische Objekte anhand entsprechender an diesen angebrachter Markerelemente, welche sonach auch als Objektmarker bezeichnet respektive erachtet werden können, zu detektieren bzw. zu erkennen. Die Detektion bzw. Erkennung jeweiliger Markerelemente kann anhand von "angelernten" bzw. "trainierten" Erkennungs- bzw. Klassifizierungsalgorithmen erfolgen, welche im Vorhinein mit den verwendeten Markerelementen "trainiert" wurden. Die Markerelementdetektion bzw. -erkennung kann anhand von Prinzipien der "Augmented Reality" (rechnergestütze Objekterkennung) erfolgen. Hierbei kann beispielsweise auf die in der wissenschaftlichen Veröffentlichung Kato, H. & Billingurst, M., Marker Tracking and HMD Calibration for a Video-based Augmented Reality, Conferencing System Proceedings of 2nd IEEE and ACM International Workshop on Augmented Reality, 1999, 85 - 94 beschriebenen Prinzipien zurückgegriffenen werden.

Zweckmäßig werden Markerelemente mit mehreren funktional betrachtet unterschiedlichen Markerelementbereichen verwendet; d. h. jeweilige Markerelementbereiche unterscheiden sich in Aufgabe und Funktion.

Über einen ersten Markerelementbereich kann eine Unterscheidung des Markerelements von übrigen Bereichen des Objekts und/oder der Umgebung erfolgen. Ein entsprechender erster Markerelementbereich dient sonach im Allgemeinen dazu, das Markerelement optisch von übrigen Bereichen des mit diesem versehenen Objekts abzuheben, so dass ein Markerelement als solches überhaupt detektiert bzw. erkannt werden kann.

Über einen zweiten Markerelementbereich kann eine Erkennung der Ausrichtung des Markerelements relativ zu dem mit dem Markerelement versehenen Objekt erfolgen. Ein entsprechender zweiter Markerelementbereich dient sonach im Allgemeinen dazu, eine eindeutige Ausrichtungsbestimmung des Markerelements vorzunehmen, welche für die Auswertung der aufgenommenen Referenzdaten von besonderer Relevanz sein kann.

Über einen dritten Markerelementbereich kann ein Auslesen von in dem dritten Markerelementbereich hinterlegten, insbesondere marker- und/oder objektspezifischen, Information erfolgen. Ein entsprechender dritter Markerelementbereich dient sonach im Sinne eines Daten- oder Informationsbereichs im Allgemeinen dazu, bestimmte Informationen in dem Markerelement zu hinterlegen. Bei solchen Informationen kann es sich insbesondere um markerspezifische Informationen, z. B. unmittelbare oder mittelbare, d. h. z. B. durch Abgleich mit einem Informationsspeicher hinterlegten Informationen zu erhaltende, Informationen zu der Anbringung bzw. Positionierung des Markerelements an einem jeweiligen Objekt, und/oder um objektspezifische Informationen, d. h. Informationen zur Art bzw. Typ des Objekts, handeln. Ein konkretes Beispiel einer entsprechenden markerspezifischen Information kann z. B. bei einem an einem Kraftfahrzeug angebrachten Markerelement eine Information sein, aus welcher sich ableiten bzw. entnehmen lässt, dass das Markerelement im Bereich des Hecks angebracht ist. Ein konkretes Beispiel einer entsprechenden objektspezifischen Information kann z. B. bei einem an einem Fahrzeug angebrachten Markerelement eine Information sein, aus welcher sich ableiten bzw. erkennen lässt, dass das Fahrzeug ein Ego-Fahrzeug oder kein Ego-Fahrzeug, ein Fahrzeug einer bestimmten Baureihe oder ein Fahrzeug einer bestimmten Baureihe mit einer bestimmten Karosseriebauform, z. B. Limousine oder Kombi, ist. In dem dritten Markerelementbereich sind typischerweise keine Maßnahmen zur Korrektur von Bildartefakten oder sonstigen Fehlern integriert, da diese bedingt durch die Aufnahme der Referenzdaten aus der Vogelperspektive, welche, wie erwähnt, eine hervorragende Sicht auf die aufzunehmende Szenerie ermöglicht, nicht erforderlich sind.

Die vorstehend genannten unterschiedlichen Markerelementbereiche sind vermittels der oder einer Bildaufnahmeeinrichtung voneinander unterscheidbar.

Konkret kann als entsprechendes Markerelement ein Markerelement mit einer rechteckigen, insbesondere quadratischen, Grundform verwendet werden. Ein entsprechender erster Markerelementbereich kann dabei einen äußeren, insbesondere umlaufend rahmenförmigen, Randbereich des Markerelements einnehmen. Ein entsprechend zweiter Markerelementbereich kann einen innerhalb des ersten Markerelementbereichs ausgebildeten, insbesondere L-förmigen, Bereich des Markerelements einnehmen. Aus einer aus zwei winklig, insbesondere rechtwinklig, zueinander verlaufenden Abschnitten gebildeten L-Form, allgemein Winkelform, kann eine exakte Ausrichtung des Markerelements relativ zu dem mit diesem versehenen Objekt abgeleitet werden. Ein entsprechender dritter Markerelementbereich kann einen innerhalb des zweiten Markerelementbereichs ausgebildeten rechteckigen, insbesondere quadratischen, Bereich des Markerelements einnehmen. In dem dritten Markerelementbereich können, z. B. nach Art eines QR-Codes, verschiedene optisch erfassbare Bitfelder ausgebildet sein, welche einen Daten- bzw. Informationsbereich bilden.

Neben den beschriebenen als Objektmarker zu bezeichnenden bzw. zu erachtenden Markerelementen können zweckmäßig wenigstens zwei weitere, in einer definierten Ausrichtung und/oder Position zueinander stehende Markerelemente vorgesehen und somit aufgenommen werden. Anhand dieser aufgenommenen Markerelemente kann ein Koordinatensystem erstellt werden, in welchem die Ausrichtung und/oder Position sämtlicher aufgenommener Objekte (zueinander) referenziert werden. Über die weiteren Markerelemente kann sonach ein Referenzkoordinatensystem definiert werden, welches insbesondere deshalb zweckmäßig ist, als derart eine gewisse Unabhängigkeit von einer extrinsischen Kalibrierung der Bildaufnahmeeinrichtung geschaffen werden kann. Die Positionen sämtlicher aufgenommener Objekte können durch die weiteren, sonach als Referenzmarker zu bezeichnenden bzw. zu erachtenden Markerelemente eindeutig in den Referenzdaten respektive einer aus diesen erstellten Bilddarstellung definiert bzw. referenziert werden.

Die Erfindung betrifft ferner ein Verfahren zum Abgleich von mit wenigstens einem kraftfahrzeugseitigen Assistenzsystem aufgenommenen, wenigstens ein Objekt und/oder eine bestimmte Umgebung beschreibenden Daten mit wenigstens ein Objekt und/oder eine bestimmte Umgebung beschreibenden Referenzdaten. Das Verfahren zeichnet sich dadurch aus, dass die Referenzdaten mittels eines wie vorstehend beschriebenen Verfahrens aufgenommen werden oder wurden. Es gelten hier sonach sämtliche Ausführungen zu dem Verfahren zur Aufnahme entsprechender Referenzdaten analog.

Weiterhin betrifft die Erfindung eine Vorrichtung gemäß Anspruch 9 zur Aufnahme von wenigstens ein Objekt und/oder eine bestimmte Umgebung um das oder ein Objekt beschreibenden Referenzdaten, welche Referenzdaten zum Abgleich mit von wenigstens einem kraftfahrzeugseitigen Assistenzsystem aufgenommenen, wenigstens ein Objekt und/oder eine bestimmte Umgebung um das oder ein Objekt beschreibenden Daten vorgesehen sind. Die Vorrichtung zeichnet sich dadurch aus, dass sie wenigstens eine Bildaufnahmeeinrichtung umfasst, welche dazu ausgebildet oder eingerichtet ist, die Referenzdaten aus der Vogelperspektive aufzunehmen. Auch hier gelten sonach sämtliche Ausführungen zu dem Verfahren zur Aufnahme entsprechender Referenzdaten analog.

Die Vorrichtung weist also eine Halterungseinrichtung auf, welche ein auf, insbesondere rollenförmigen, Bewegungsmitteln relativ zu einem Untergrund bewegbar gelagertes Grundgerüst und wenigstens einen schwenkbar relativ zu dem Grundgerüst gelagerten Halterungsarm mit wenigstens einem eine Lagerstelle für die Bildaufnahmeeinrichtung bildenden Lagerabschnitt, wobei an dem Haltungsarm wenigstens ein Abstützelement, insbesondere in Form eines Standfußes oder umfassend einen Standfuß, zum Abstützen des relativ zu dem Grundgerüst verschwenkten Halterungsarms auf dem Untergrund befestigt ist, umfasst.

Die oder eine Halterungseinrichtung kann, gegebenenfalls zusätzlich, eine an dem oder einem auf, insbesondere rollenförmigen, Bewegungsmitteln relativ zu einem Untergrund bewegbar gelagerten Grundgerüst befestigte Justiereinrichtung zur Justierung, insbesondere Feinjustierung, der Ausrichtung und/oder der Position der an dem oder einem schwenkbar relativ zu dem Grundgerüst gelagerten Halterungsarm mit wenigstens einem eine Lagerstelle für die Bildaufnahmeeinrichtung bildenden Lagerabschnitt gelagerten Bildaufnahmeeinrichtung, eine an dem Grundgerüst befestigte Bildverarbeitungseinrichtung zur Verarbeitung der von der Bildaufnahmeeinrichtung aufgenommenen Daten, und einen an dem Grundgerüst befestigten, insbesondere wiederaufladbaren, elektrischen Energiespeicher (Batterie) zur elektrischen Versorgung der Bildaufnahmeeinrichtung und/oder der oder einer Bildverarbeitungseinrichtung und/oder eines mobilen Endgeräts, insbesondere eines Laptops, Smartphones oder eines Tablets, umfassen.

Die Vorrichtung kann ferner entsprechende Markerelemente, d. h. insbesondere entsprechende Objektmarker und/oder Referenzmarker, umfassen, wovon zumindest die Objektmarker an einem aufzunehmenden Objekt anbringbar oder angebracht sind.

Ein als Objektmarker dienendes Markerelement kann mehrere funktional betrachtet unterschiedliche, vermittels der Bildaufnahmeeinrichtung unterscheidbare Markerelementbereiche aufweisen, wobei über einen ersten Markerelementbereich eine Unterscheidung des Markerelements von übrigen Bereichen des Objekts möglich ist, über einen zweiten Markerelementbereich eine Erkennung der Ausrichtung des Markerelements relativ zu dem mit Markerelement versehenen Objekt möglich ist und ein über einen dritten Markerelementbereich ein Auslesen von in dem dritten Markerelementbereich hinterlegten, insbesondere marker- und/oder objektspezifischen, Informationen möglich ist.

Ein solches Markerelement kann eine rechteckige, insbesondere quadratische, Grundform aufweisen, wobei der erste Markerelementbereich einen äußeren, insbesondere umlaufend rahmenförmigen, Randbereich des Markerelements einnimmt, der zweite Markerelementbereich einen innerhalb des ersten Markerelementbereichs ausgebildeten, insbesondere L-förmigen, Bereich des Markerelements einnimmt und der dritte Markerelementbereich einen innerhalb des zweiten Markerelementbereichs ausgebildeten rechteckigen, insbesondere quadratischen, Bereich des Markerelements einnimmt.

Als entsprechende Referenzmarker kann die Vorrichtung wenigstens zwei weitere, in einer definierten Ausrichtung und/oder Position zueinander stehende Markerelemente umfassen, anhand welcher Markerelemente ein Koordinatensystem erstellbar ist, in welchem die Ausrichtung und/oder Position sämtlicher aufgenommener Objekte (zueinander) referenzierbar sind.

Weitere Vorteile und Einzelheiten der Erfindung ergeben sich aus den im folgenden beschriebenen Ausführungsbeispielen sowie anhand der Zeichnung. Dabei zeigen:
- Fig. 1, 2: je eine Prinzipdarstellung einer im Rahmen eines Verfahrens gemäß einem Ausführungsbeispiel aufzunehmenden Szenerie;
- Fig. 3, 4: je eine Prinzipdarstellung einer Halterungseinrichtung gemäß einem Ausführungsbeispiel; und
- Fig. 5: eine Prinzipdarstellung eines Markerelements gemäß einem Ausführungsbeispiel.

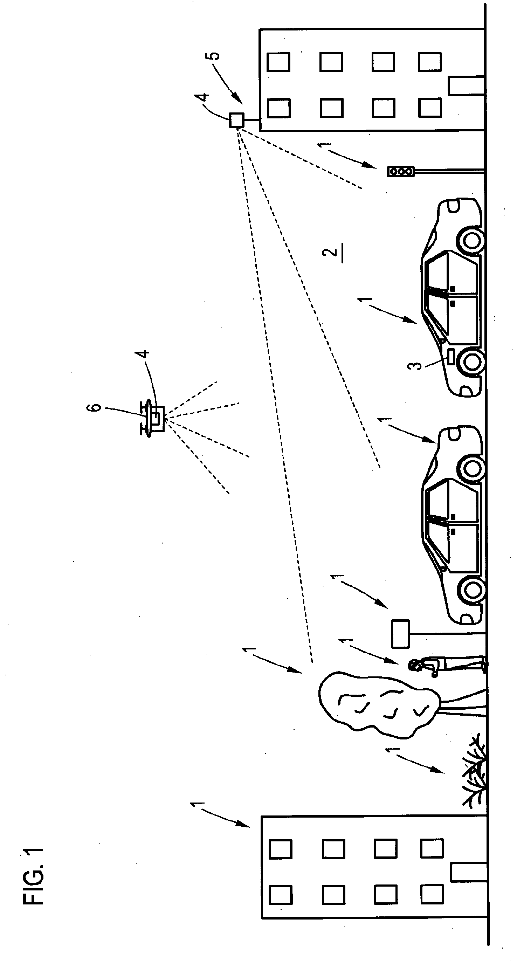

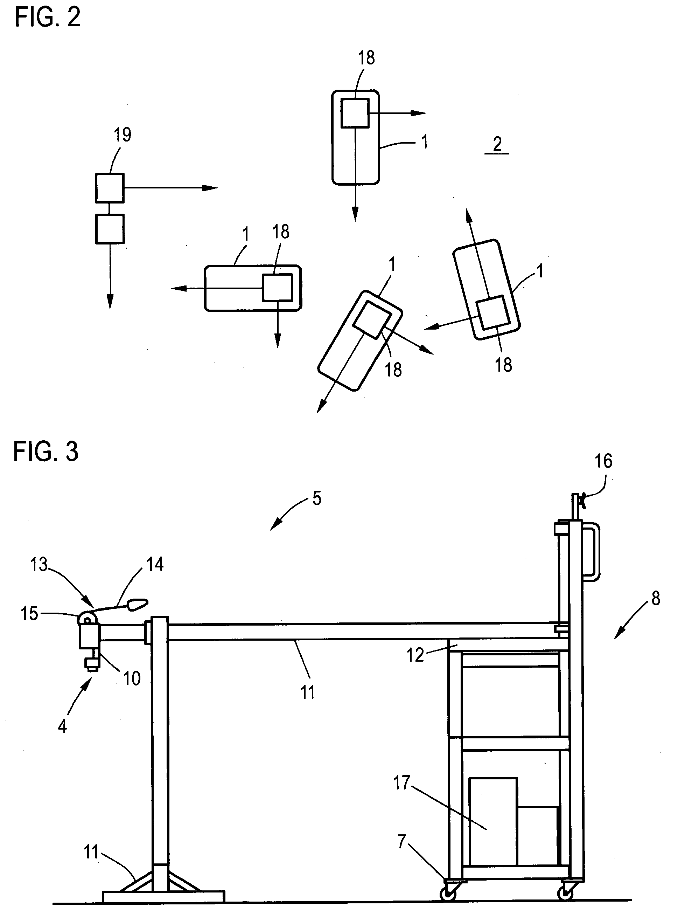

Die Fig. 1, 2 zeigen je eine Prinzipdarstellung einer im Rahmen eines Verfahrens gemäß einem Ausführungsbeispiel aufzunehmenden Szenerie, anhand welcher im Folgenden ein Ausführungsbeispiel eines Verfahren zur Aufnahme von wenigstens ein Objekt 1 und/oder eine bestimmten Umgebung 2 um das oder ein Objekt 1 beschreibenden Referenzdaten, welche Referenzdaten zum Abgleich mit von wenigstens einem kraftfahrzeugseitigen Assistenzsystem 3 aufgenommenen, wenigstens ein Objekt 1 und/oder eine bestimmte Umgebung 2 um das oder ein Objekt 1 beschreibenden Daten vorgesehen sind, erläutert wird.

Bei Fig. 1 handelt es sich um eine Seitenansicht einer entsprechenden Szenerie, bei Fig. 2 um eine Aufsicht auf einer entsprechenden Szenerie. Die in Fig. 2 dargestellten Pfeile deuten Bewegungsvektoren der dargestellten Objekte 1 an.

Unter Referenzdaten sind solche Daten, d. h. insbesondere Bilddaten, zu verstehen, welche zum Abgleich mit von einem kraftfahrzeugseitigen Assistenzsystem 3 aufgenommenen Daten vorgesehen sind. Bei entsprechenden kraftfahrzeugseitigen Assistenzsystemen 3 handelt es sich insbesondere um Fahrerassistenzsysteme bzw. Sicherheitssysteme, wie z. B. Systeme der integralen Sicherheit. Die Assistenzsysteme 3 können im Zusammenhang mit einer zumindest teilautomatisierten Fahrzeugführung relevant sein.

Bei entsprechenden Objekten 1 handelt es sich sowohl um statische Objekte 1 als auch um dynamische Objekte 1. Als statische Objekte 1 sind in Fig. 1 beispielhaft Gebäude, Bäume, Büsche, Verkehrsschilder und Ampelanlagen dargestellt. Unter statischen Objekten 1 sind im Allgemeinen Objekte 1 einer urbanen oder ruralen Infrastruktur zu verstehen. Als dynamische Objekte 1 sind in Fig. 1 beispielhaft Kraftfahrzeuge und Passanten dargestellt. Unter dynamischen Objekten 1 sind im Allgemeinen typische Verkehrsteilnehmer zu verstehen.

Gemäß dem Verfahren wird zur Aufnahme entsprechender Referenzdaten eine Bildaufnahmeeinrichtung 4 verwendet, welche eine bildbasierte Aufnahme entsprechender Referenzdaten ermöglicht. Als Bildaufnahmeeinrichtung 4 ist in den in den Fig. gezeigten Ausführungsbeispielen eine Kamera, z. B. eine CCD-Kamera oder dergleichen, vorgesehen.

Wie z. B. anhand der Positionierung der auf dem Dach des rechten Gebäudes befindlichen Bildaufnahmeeinrichtung 4 zu erkennen, werden die Referenzdaten verfahrensgemäß aus der Vogelperspektive aufgenommen. Hierunter ist zu verstehen, dass die Referenzdaten aus einer gegenüber der aufzunehmenden Szenerie, d. h. den aufzunehmenden Objekten 1 bzw. dem aufzunehmenden Umfeld 2, erhöhten Aufnahmeposition aufgenommen werden. Die erhöhte Aufnahmeposition ergibt sich dadurch, dass die Bildaufnahmeeinrichtung 4 zur Aufnahme der Referenzdaten in einer Position deutlich oberhalb der aufzunehmenden Objekte 1 bzw. Umgebung 2 befindlich ist. Die Aufnahmeposition, d. h. die Position der Bildaufnahmeeinrichtung 4, aus welcher die Referenzdaten tatsächlich aufgenommen werden, ist also gegenüber den aufzunehmenden Objekten 1 respektive der aufzunehmenden Umgebung 2 derart erhöht, dass eine für die Vogelperspektive charakteristische schiefe Parallelprojektion gegeben ist, wie sie beispielsweise zu einer veranschaulichten Darstellung von Karten- oder Planmaterial bekannt ist. Die Aufnahme der Referenzdaten aus der Vogelperspektive ermöglicht eine hervorragende Sicht auf die aufzunehmende Szenerie.

In Abhängigkeit der konkreten Ausrichtung und Positionierung der Bildaufnahmeeinrichtung relativ zu den aufzunehmenden Objekten 1 bzw. relativ zu der aufzunehmenden Umgebung 2 können unterschiedlich große Aufnahmebereiche erfasst und in entsprechende Referenzdaten umgesetzt werden. Selbstverständlich sind in diesem Zusammenhang auch diverse Aufnahmeparameter, insbesondere die Auflösung und Öffnungswinkel, der jeweils verwendeten Bildaufnahmeeinrichtung 4 von Bedeutung, welche sonach ebenso Einfluss auf den tatsächlichen Aufnahmebereich und die hieraus umsetzbaren Referenzdaten haben. Für ein Beispiel einer Bildaufnahmeeinrichtung 4 mit einer Auflösung von 1280 x 1024 Pixel und einem horizontalen Öffnungswinkel von ca. 77° und einem vertikalen Öffnungswinkel von ca. 65° ist z. B. ein Aufnahmebereich von ca. 25 x 25m möglich.

Wie im Zusammenhang mit der auf dem rechten Gebäude positionierten Bildaufnahmeeinrichtung 4 erwähnt, kann die Aufnahme der Referenzdaten aus der Vogelperspektive dadurch realisiert sein, dass die Referenzdaten von einer Aufnahmeposition an, in oder auf einem Bauwerk aufgenommen werden. Neben der in Fig. 1 dargestellten Möglichkeit der Positionierung der Bildaufnahmeeinrichtung 4 auf einem Dach eines Gebäudes, könnten die Referenzdaten z. B. auch von einem Balkon aufgenommen werden. Die Aufnahmeposition könnte auch innerhalb eines Gebäudes sein. Die Referenzdaten könnten sonach z. B. auch durch ein, gegebenenfalls geöffnetes, Fenster oder durch einen vergleichbaren baulichen Durchbruch eines Gebäudes aufgenommen werden.

In Fig. 1 ist neben der auf dem rechten Gebäude positionierten Bildaufnahmeeinrichtung 4 eine weitere Bildaufnahmeeinrichtung 4 gezeigt. Diese ist an einem rein schematisch dargestellten Flugobjekt 6 angebracht. Bei dem Flugobjekt handelt es sich in dem in Fig. 1 gezeigten Beispiel um eine unbemannte Drohne. Allgemein kann im Rahmen eines nicht zu der beanspruchten Erfindung gehörenden Verfahrens ein unbemanntes oder bemanntes ein Flugobjekt 6 verwendet werden, an welchem wenigstens eine Bildaufnahmeeinrichtung 4 anbringbar bzw. angebracht ist bzw. in welchem von Haus aus wenigstens eine Bildaufnahmeeinrichtung 4 integriert ist.

In dem in Fig. 1 gezeigten Ausführungsbeispiel ist die auf dem rechten Gebäude positionierte Bildaufnahmeeinrichtung 4 zumindest während der Aufnahme der Referenzdaten an einer Halterungseinrichtung 5 gelagert. Die Halterungseinrichtung 5 dient allgemein einer stabilen Ausrichtung bzw. Positionierung Bildaufnahmeeinrichtung 4. Die Halterungseinrichtung 5 kann ohne Weiteres an, in oder auf einem Bauwerk angeordnet, d. h. ausgerichtet bzw. positioniert, gegebenenfalls auch befestigt, werden.

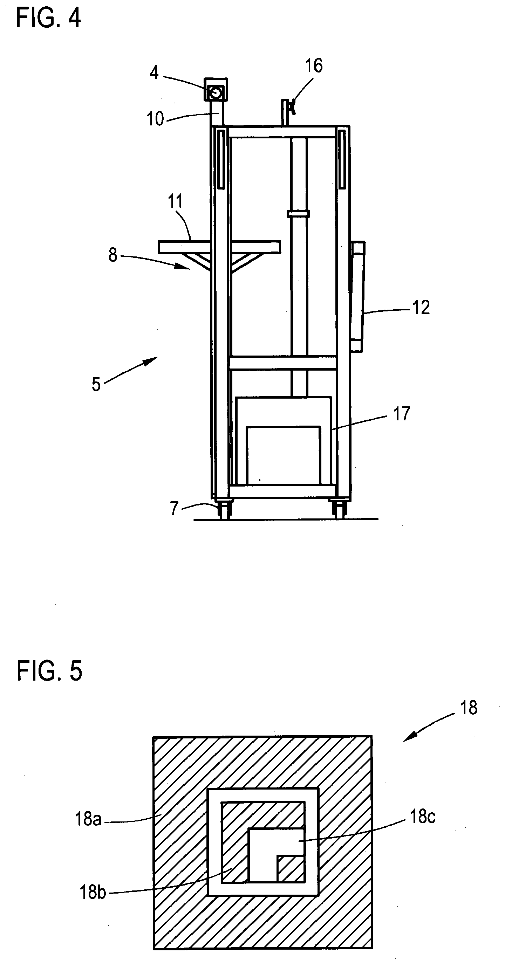

In den Fig. 3, 4 ist jeweils ein Ausführungsbeispiel einer entsprechenden Halterungseinrichtung 5 in einer Seitenansicht gezeigt. Ersichtlich umfasst eine Halterungseinrichtung 5 ein auf rollenförmigen Bewegungsmitteln 7 relativ zu einem Untergrund bewegbar gelagertes Grundgerüst 8 und einen zwischen einer in Fig. 3 gezeigten, von dem Grundgerüst 8 (im Vergleich zu einer in Fig. 4 gezeigten eingeschwenkten Stellung weiter) beabstandet angeordneten ausgeschwenkten Stellung und einer an bzw. innerhalb des Grundgerüsts 8 angeordneten eingeschwenkten Stellung, schwenkbar relativ zu dem Grundgerüst 8 gelagerten Halterungsarm 9. Der Halterungsarm 9 weist einen eine Lagerstelle für die Bildaufnahmeeinrichtung 4 bildenden Lagerabschnitt 10 auf. An dem Haltungsarm 9 ist ein Abstützelement 11, hier in Form eines Standfußes, zum Abstützen des relativ zu dem Grundgerüst 8 verschwenkten Halterungsarms 9 auf dem Untergrund befestigt. Der Halterungsarm 9 kann, z. B. teleskopartig, verlängerbar ausgeführt sein.

Die Halterungseinrichtung 5 umfasst ferner ein zwischen einer von dem Grundgerüst 8 im Vergleich zu einer in Fig. 4 gezeigten eingeschwenkten Stellung weiter beabstandet angeordneten ausgeschwenkten Stellung und einer an oder innerhalb des Grundgerüsts 8 angeordneten eingeschwenkten Stellung schwenkbar an dem Grundgerüst 8 gelagertes Ablageelement 12 zur Ablage eines mobilen Endgeräts, insbesondere eines Laptops oder Tablets, nach Art eines Klapptisches.
Die Halterungseinrichtung 5 umfasst weiterhin eine an dem Grundgerüst 8 befestigte Justiereinrichtung 13 zur Justierung, insbesondere Feinjustierung, der Ausrichtung und/oder der Position der an dem halterungsarmseitigen Lagerabschnitt 10 gelagerten Bildaufnahmeeinrichtung 4. Die Justiereinrichtung 13 ist hier durch ein mit einer Zugkraft beaufschlagbares Zugmittel 14 gebildet, welches zwischen einem im Bereich des Lagerabschnitts 10 angeordneten Stützpunkt 15 und einem im Bereich eines auf dem Grundgerüst 8 angeordneten Gegenstützpunkt 16 verspannt werden kann.

Zudem ist an dem Grundgerüst 8 ein wiederaufladbarer elektrischer Energiespeicher 17, z. B. in Form einer Lithiumbatterie, zur elektrischen Versorgung der Bildaufnahmeeinrichtung 4 und/oder einer ebenso an dem Grundgerüst 8 befestigten Bildverarbeitungseinrichtung (nicht gezeigt) und/oder eines mobilen Endgeräts (nicht gezeigt), insbesondere eines Laptops, Smartphones oder eines Tablets, gelagert. Selbstverständlich können in diesem Zusammenhang auch elektrische Steckerleisten oder dergleichen befestigt sein, über welche sich die seitens des Energiespeichers 17 bereitgestellte elektrische Energie an unterschiedliche elektrische Verbraucher verteilen lässt.

Die Halterungseinrichtung 5 kann sonach sämtliche für die Aufnahme, Verarbeitung und Ausgabe entsprechender Referenzdaten erforderliche Einrichtungen sowie in Form eines entsprechenden elektrischen Energiespeichers 17 eine diesen zuordenbare oder zugeordnete Energiequelle beinhalten und sonach eine (weitgehend) autarke Funktionseinheit darstellen.

Die Halterungseinrichtung 5 ist aus lösbar miteinander verbindbaren oder verbundenen Standardbauteilen, wie z. B. Streben- oder Profilbauteilen, aufgebaut, was Vorteile im Hinblick auf Montage, Handhabung und Transport der Halterungseinrichtung 5 bedeutet. Gleichermaßen können derart die Kosten für die Halterungseinrichtung 5 vergleichsweise gering gehalten werden.

Im Rahmen des Verfahrens werden verschiedene Markerelemente 18, 19 vorgesehen und somit aufgenommen, was im Weiteren unter Bezugnahme auf die Fig. 2 und 5 näher erläutert wird.

Einerseits werden an jeweiligen aufzunehmenden oder aufgenommenen Objekten 1 angebrachte Markerelemente 18 vorgesehen und somit aufgenommen (vgl. Fig. 2). Aufzunehmende statische wie insbesondere auch dynamische Objekte 1 werden sonach anhand entsprechender an diesen angebrachter Markerelemente 18 detektiert bzw. erkannt. Diese Markerelemente 18 können insofern als Objektmarker bezeichnet respektive erachtet werden.
Die Detektion bzw. Erkennung jeweiliger Markerelemente 18 erfolgt anhand von "angelernten" bzw. "trainierten" Erkennungs- bzw. Klassifizierungsalgorithmen, welche im Vorhinein mit den verwendeten Markerelementen 18 "trainiert" wurden. Die Markerelementdetektion bzw. -erkennung kann dabei anhand von Prinzipien der "Augmented Reality" (rechnergestütze Objekterkennung) erfolgen.

Wie sich aus dem in Fig. 5 gezeigten Ausführungsbeispiel eines entsprechenden Markerelements 18 ergibt, werden Markerelemente 18 mit mehreren funktional betrachtet unterschiedlichen Markerelementbereichen 18a, 18b, 18c verwendet; jeweilige Markerelementbereiche 18a, 18b, 18c unterscheiden sich sonach in Aufgabe und Funktion.
Über einen im Vergleich zu dem Objekt 1 deutlich kontrastierten ersten Markerelementbereich 18a erfolgt eine Unterscheidung des Markerelements 18 von übrigen Bereichen des jeweiligen Objekts 1. Ein entsprechender erster Markerelementbereich 18a dient sonach dazu, ein jeweiliges Markerelement 18 optisch von übrigen Bereichen eines jeweiligen Objekts 1 abzuheben, so dass das Markerelement 18 als solches überhaupt detektiert bzw. erkannt werden kann.

Über einen zweiten Markerelementbereich 18b erfolgt eine Erkennung der Ausrichtung des Markerelements 18 relativ zu dem mit dem Markerelement 18 versehenen Objekt 1. Ein entsprechender zweiter Markerelementbereich 18b dient sonach dazu, eine eindeutige Ausrichtungsbestimmung eines jeweiligen Markerelements 18 vorzunehmen, welche für die Auswertung der aufgenommenen Referenzdaten von besonderer Relevanz sein kann. Über einen dritten Markerelementbereich 18c erfolgt ein Auslesen von in dem dritten Markerelementbereich 18c hinterlegten Informationen. Ein entsprechender dritter Markerelementbereich dient sonach im Sinne eines Daten- oder Informationsbereichs dazu, bestimmte Informationen in dem Markerelement 18 zu hinterlegen.

Bei solchen Informationen kann es sich insbesondere um markerspezifische Informationen, d. h. z. B. unmittelbare oder mittelbare, d. h. z. B. durch Abgleich mit einem Informationsspeicher hinterlegten Informationen zu erhaltende, Informationen zu der Anbringung bzw. Positionierung des Markerelements 18 an einem jeweiligen Objekt 1, und/oder um objektspezifische Informationen, d. h. Informationen zur Art bzw. Typ des mit einem jeweiligen Markerelement 18 versehenen Objekts 1, handeln. Ein konkretes Beispiel einer entsprechenden markerspezifischen Information kann z. B. bei einem an einem Kraftfahrzeug angebrachten Markerelement 18 eine Information sein, aus welcher sich ableiten bzw. entnehmen lässt, dass das Markerelement 18 im Bereich des Hecks angebracht ist. Ein konkretes Beispiel einer entsprechenden objektspezifischen Information kann z. B. bei einem an einem Kraftfahrzeug angebrachten Markerelement 18 eine Information sein, aus welcher sich ableiten bzw. erkennen lässt, dass das Fahrzeug ein Ego-Fahrzeug oder kein Ego-Fahrzeug, ein Fahrzeug einer bestimmten Baureihe oder ein Fahrzeug einer bestimmten Baureihe mit einer bestimmten Karosseriebauform, z. B. Limousine oder Kombi, ist. In dem dritten Markerelementbereich sind typischerweise keine Maßnahmen zur Korrektur von Bildartefakten oder sonstigen Fehlern integriert, da diese bedingt durch die Aufnahme der Referenzdaten aus der Vogelperspektive, welche eine hervorragende Sicht auf die aufzunehmende Szenerie ermöglicht, nicht erforderlich sind.

Anhand von Fig. 5 ist zu erkennen, dass ein entsprechendes Markerelement 18 eine rechteckige bzw. quadratische Grundform aufweist. Ein erster Markerelementbereich 18a nimmt einen äußeren, insbesondere umlaufend rahmenförmigen, Randbereich des Markerelements 18 ein. Ein zweiter Markerelementbereich 18b nimmt einen innerhalb des ersten Markerelementbereichs 18a ausgebildeten, insbesondere L-förmigen, Bereich des Markerelements 18 ein. Aus der in Fig. 5 gezeigten, aus zwei rechtwinklig zueinander verlaufenden Abschnitten gebildeten L-Form, allgemein Winkelform, des zweiten Markerelementbereichs 18b kann eine exakte Ausrichtung des Markerelements 18 abgeleitet werden. Ein dritter Markerelementbereich 18c nimmt einen innerhalb des zweiten Markerelementbereichs 18b ausgebildeten rechteckigen bzw. quadratischen Bereich des Markerelements 18 ein. In dem dritten Markerelementbereich 18c können, z. B. nach Art eines QR-Codes, verschiedene optisch erfassbare Bitfelder ausgebildet sein, welche einen Daten- bzw. Informationsbereich bilden.

Neben den beschriebenen als Objektmarker zu bezeichnenden bzw. zu erachtenden Markerelementen 18 sind wenigstens zwei weitere, in einer definierten Ausrichtung und/oder Position zueinander stehende Markerelemente 19 vorgesehen (vgl. Fig. 2). Anhand der Markerelemente 19 kann ein Koordinatensystem erstellt werden, in welchem die Ausrichtung und/oder Position sämtlicher aufgenommener Objekte 1 (zueinander) referenziert werden kann. Über die weiteren Markerelemente 19 kann sonach ein Referenzkoordinatensystem definiert werden, welches insbesondere deshalb zweckmäßig ist, als derart eine gewisse Unabhängigkeit von einer extrinsischen Kalibrierung der Bildaufnahmeeinrichtung geschaffen werden kann. Die Positionen sämtlicher aufgenommener Objekte 1 können durch die weiteren, sonach als Referenzmarker zu bezeichnenden bzw. zu erachtenden Markerelemente 19 eindeutig in den Referenzdaten respektive einer aus diesen erstellten Bilddarstellung definiert bzw. referenziert werden.

Die vermittels des beschriebenen Verfahrens aufgenommenen Referenzdaten werden in einem Verfahren zum Abgleich von mit wenigstens einem kraftfahrzeugseitigen Assistenzsystem 3 aufgenommenen, wenigstens ein Objekt 1 und/oder eine bestimmte Umgebung 2 beschreibenden Daten verwendet.

## Patentansprüche

1. Verfahren zur Aufnahme von wenigstens ein Objekt (1) und/oder eine bestimmte Umgebung (2) um das oder ein Objekt (1) beschreibenden Referenzdaten, welche Referenzdaten zum Abgleich mit von wenigstens einem kraftfahrzeugseitigen Assistenzsystem (3) aufgenommenen, wenigstens ein Objekt (1) und/oder eine bestimmte Umgebung (2) um das oder ein Objekt (1) beschreibenden Daten verwendet werden, wobei die Referenzdaten mittels wenigstens einer Bildaufnahmeeinrichtung (4) aus der Vogelperspektive aufgenommen werden, wobei die Referenzdaten von einer Aufnahmeposition an, in oder auf einem Bauwerk aufgenommen werden, wobei die Referenzdaten vermittels einer an oder auf einer Halterungseinrichtung (5) gelagerten Bildaufnahmeeinrichtung (4) aufgenommen werden, wobei die Halterungseinrichtung (5) an, in oder auf dem Bauwerk, insbesondere Gebäude, angeordnet wird,
**dadurch gekennzeichnet,**
**dass** eine Halterungseinrichtung (5) verwendet wird, welche umfasst ein auf, insbesondere rollenförmigen, Bewegungsmitteln (7) relativ zu einem Untergrund bewegbar gelagertes Grundgerüst (8) und wenigstens einen schwenkbar relativ zu dem Grundgerüst (8) gelagerten Halterungsarm (9) mit wenigstens einem eine Lagerstelle für die Bildaufnahmeeinrichtung (4) bildenden Lagerabschnitt (10), wobei an dem Halterungsarm (9) wenigstens ein Abstützelement (11), insbesondere in Form eines Standfußes oder umfassend einen Standfuß, befestigt ist, das zum Abstützen des relativ zu dem Grundgerüst (8) verschwenkten Halterungsarms (9) auf dem Untergrund verwendet wird.

2. Verfahren nach Anspruch 1,
**dadurch gekennzeichnet,**
**dass** die Referenzdaten von einer Aufnahmeposition an, in oder auf einem Gebäude aufgenommen werden, wobei eine Aufnahmeposition an, in oder auf einem oberhalb eines Erdgeschosses befindlichen Gebäudebereich, insbesondere eine Aufnahmeposition von einem Balkon oder einem Dach, gewählt wird.

3. Verfahren nach einem der vorangehenden Ansprüche,
**dadurch gekennzeichnet,**
**dass** eine Halterungseinrichtung (5) verwendet wird, welche umfasst eine an dem oder einem auf, insbesondere rollenförmigen, Bewegungsmitteln (7) relativ zu einem Untergrund bewegbar gelagerten Grundgerüst (8) befestigte Justiereinrichtung (13) zur Justierung, insbesondere Feinjustierung, der Ausrichtung und/oder der Position der an dem oder einem schwenkbar relativ zu dem Grundgerüst (8) gelagerten Halterungsarm (9) mit wenigstens einem eine Lagerstelle für die Bildaufnahmeeinrichtung (4) bildenden Lagerabschnitt (10) gelagerten Bildaufnahmeeinrichtung (4),
eine an dem Grundgerüst (8) befestigte Bildverarbeitungseinrichtung zur Verarbeitung der von der Bildaufnahmeeinrichtung (4) aufgenommenen Daten, und
einen an dem Grundgerüst (8) befestigten, insbesondere wiederaufladbaren, elektrischen Energiespeicher (17) zur elektrischen Versorgung der Bildaufnahmeeinrichtung (4) und/oder eines mobilen Endgeräts, insbesondere eines Laptops, Smartphones oder Tablets.

4. Verfahren nach einem der vorangehenden Ansprüche,
**dadurch gekennzeichnet,**
**dass** wenigstens ein aufzunehmendes oder aufgenommenes Objekt (1) mit wenigstens einem Markerelement (18, 19) versehen wird oder wurde, welches Markerelement (18, 19) von der Bildaufnahmeeinrichtung (4) aufgenommen wird.

5. Verfahren nach Anspruch 4,
**dadurch gekennzeichnet,**
**dass** ein Markerelement (18) mit mehreren funktional betrachtet unterschiedlichen Markerelementbereichen (18a, 18b, 18c) verwendet wird, wobei über einen ersten Markerelementbereich (18a) eine Unterscheidung des Markerelements (18) von übrigen Bereichen des Objekts (1) erfolgt, über einen zweiten Markerelementbereich (18b) eine Erkennung der Ausrichtung des Markerelements (18) relativ zu dem mit Markerelement (18) versehenen Objekt (1) erfolgt und ein über einen dritten Markerelementbereich (18c) ein Auslesen von in dem dritten Markerelementbereich (18c) hinterlegten, insbesondere marker- und/oder objektspezifischen, Informationen erfolgt.

6. Verfahren nach Anspruch 5,
**dadurch gekennzeichnet,**
**dass** ein Markerelement (18) mit einer rechteckigen, insbesondere quadratischen, Grundform verwendet wird, wobei der erste Markerelementbereich (18a) einen äußeren, insbesondere umlaufend rahmenförmigen, Randbereich des Markerelements (18) einnimmt, der zweite Markerelementbereich (18b) einen innerhalb des ersten Markerelementbereichs (18a) ausgebildeten, insbesondere L-förmigen, Bereich des Markerelements (18) einnimmt und der dritte Markerelementbereich (18c) einen innerhalb des zweiten Markerelementbereichs (18b) ausgebildeten rechteckigen, insbesondere quadratischen, Bereich des Markerelements (18) einnimmt.

7. Verfahren zum Abgleich von mit wenigstens einem kraftfahrzeugseitigen Assistenzsystem (3) aufgenommenen, wenigstens ein Objekt (1) und/oder eine bestimmte Umgebung (2) um das oder ein Objekt (1) beschreibenden Daten mit wenigstens ein Objekt (1) und/oder eine bestimmte Umgebung (2) um das oder ein Objekt (1) beschreibenden Referenzdaten, **dadurch gekennzeichnet,**
**dass** die Referenzdaten mittels eines Verfahrens gemäß einem der vorangehenden Ansprüche aufgenommen werden oder wurden.

8. Verfahren nach einem der vorangehenden Ansprüche,
**dadurch gekennzeichnet,**
**dass** durch die Bildaufnahmeeinrichtung (4) wenigstens zwei in einer definierten Ausrichtung und/oder Position zueinander stehende Markerelemente (19) aufgenommen werden, die ein Koordinatensystem definieren, in welchem die Ausrichtungen und/oder Positionen sämtlicher aufgnommener Objekte (1) definiert werden.

9. Vorrichtung zur Aufnahme von wenigstens ein Objekt (1) und/oder eine bestimmte Umgebung (2) um das oder ein Objekt (1) beschreibenden Referenzdaten, welche Referenzdaten zum Abgleich mit von wenigstens einem kraftfahrzeugseitigen Assistenzsystem (3) aufgenommenen, wenigstens ein Objekt (1) und/oder eine bestimmte Umgebung (2) um das oder ein Objekt (1) beschreibenden Daten verwendbar sind, wobei die Vorrichtung wenigstens eine Bildaufnahmeeinrichtung (4) umfasst, welche dazu ausgebildet oder eingerichtet ist, die Referenzdaten aus der Vogelperspektive aufzunehmen,
**dadurch gekennzeichnet,**
**dass** sie eine Halterungseinrichtung (5) aufweist, welche umfasst ein auf, insbesondere rollenförmigen, Bewegungsmitteln relativ zu einem Untergrund bewegbar gelagertes Grundgerüst und
wenigstens einen schwenkbar relativ zu dem Grundgerüst gelagerten Halterungsarm mit wenigstens einem eine Lagerstelle für die Bildaufnahmeeinrichtung bildenden Lagerabschnitt, wobei an dem Halterungsarm (9) wenigstens ein Abstützelement (11), insbesondere in Form eines Standfußes, zum Abstützen des relativ zu dem Grundgerüst (8) verschwenkten Halterungsarms (9) auf dem Untergrund befestigt ist.

10. Vorrichtung nach Anspruch 9,
**dadurch gekennzeichnet,**
**dass** die Halterungseinrichtung (5) umfasst
eine an dem oder einem auf, insbesondere rollenförmigen, Bewegungsmitteln (7) relativ zu einem Untergrund bewegbar gelagerten Grundgerüst (8) befestigte Justiereinrichtung (13) zur Justierung, insbesondere Feinjustierung, der Ausrichtung und/oder der Position der an dem oder einem schwenkbar relativ zu dem Grundgerüst (8) gelagerten Halterungsarm (9) mit wenigstens einem eine Lagerstelle für die Bildaufnahmeeinrichtung (4) bildenden Lagerabschnitt (10) gelagerten Bildaufnahmeeinrichtung (4),
eine an dem Grundgerüst (8) befestigte Bildverarbeitungseinrichtung zur Verarbeitung der von der Bildaufnahmeeinrichtung (4) aufgenommenen Daten, und einen an dem Grundgerüst (8) befestigten, insbesondere wiederaufiadbaren, elektrischen Energiespeicher (17) zur elektrischen Versorgung der Bildaufnahmeeinrichtung (4) und/oder einer Bildverarbeitungseinrichtung und/oder eines mobilen Endgeräts, insbesondere eines Laptops, Smartphones oder Tablets.

11. Vorrichtung nach Anspruch 9 oder 10,
**dadurch gekennzeichnet,**
**dass** sie wenigstens ein an einem aufzunehmenden oder aufgenommenen Objekt (1) anbringbares oder angebrachtes Markerelement (18, 19) umfasst.

12. Vorrichtung nach Anspruch 11,
**dadurch gekennzeichnet,**
**dass** ein Markerelement (18) mehrere funktional unterschiedliche Markerelementbereiche (18a, 18b, 18c) aufweist, wobei über einen ersten Markerelementbereich (18a) eine Unterscheidung des Markerelements (18) von übrigen Bereichen des Objekts (1) möglich ist, über einen zweiten Markerelementbereich (18b) eine Erkennung der Ausrichtung des Markerelements (18) relativ zu dem mit Markerelement (18) versehenen Objekt (1) möglich ist und ein über einen dritten Markerelementbereich (18c) ein Auslesen von in dem dritten Markerelementbereich (18c) hinterlegten, insbesondere marker- und/oder objektspezifischen, Informationen möglich ist.

13. Vorrichtung nach Anspruch 12,
**dadurch gekennzeichnet,**
**dass** ein Markerelement (18, 19) eine rechteckige, insbesondere quadratische, Grundform aufweist, wobei der erste Markerelementbereich (18a) einen äußeren, insbesondere umlaufend rahmenförmigen, Randbereich des Markerelements (18) einnimmt, der zweite Markerelementbereich (18b) einen innerhalb des ersten Markerelementbereichs (18a) ausgebildeten, insbesondere L-förmigen, Bereich des Markerelements (18) einnimmt und der dritte Markerelementbereich (18c) einen innerhalb des zweiten Markereiementbereichs (18b) ausgebildeten rechteckigen, insbesondere quadratischen, Bereich des Markerelements (18) einnimmt.

14. Vorrichtung nach einem der Ansprüche 9 bis 13,
**dadurch gekennzeichnet,**
**dass** sie wenigstens zwei in einer definierten Ausrichtung und/oder Positionen zueinander stehende Markerelemente (19) aufweist, die ein Koordinatensystem definieren, in dem durch die Vorrichtung die Ausrichtungen und/oder Positionen sämtlicher aufgenommener Objekte (1) definierbar sind.

## Claims

1. Method for recording reference data describing at least one object (1) and/or a specified environment (2) around the or an object (1), with the aforementioned reference data being provided for comparison with data which has been captured by at least one vehicle-mounted assistance system (3) and which describes at least one object (1) and/or a specified environment (2) around the object or an object (1), wherein the reference data is captured from a bird's-eye view by at least one image capture device (4), wherein the reference data is captured from a recording position in or on a structure, wherein the reference data is captured by means of an image capture device (4) mounted in or on a mounting device (5), wherein the mounting device (5) is placed in or on the structure, specifically a building,
**characterised in that**,
a mounting device (5) is used, which comprises specifically a roll-shaped movement means (7) movably mounted on a basic framework (8) relative to a substrate and at least one pivotably mounted support arm (9) relative to the basic framework (8) with at least one support section (10) forming a mounting point for the image capture device (4), wherein at least one support element (11), specifically in the form of a pedestal or comprising a pedestal, is attached to the support arm (9), which is used to support the support arm (9) pivoted relative to the basic framework (8) on the substrate.

2. Method according to claim 1,
**characterised in that**,
the reference data is captured from a recording position in or on a building, wherein a recording position is chosen in or on an area of a building above the ground floor, specifically a recording position on a balcony or a roof.

3. Method according to any one of the preceding claims,
**characterised in that**,
a mounting device (5) is used, which comprises an adjusting device (13) affixed to the or a specifically roll-shaped movement means (7) movably mounted on a basic framework (8) relative to a substrate, for adjustment, specifically fine adjustment of the orientation and/or position of the or a pivotably mounted support arm (9) relative to the basic framework (8) with at least one image capture device (4) mounted on a support section (10) forming a mounting point for the image capture device (4),
an image processing device attached to the basic framework (8) for processing the data recorded by the image capture device (4), and
an electrical energy storage device (17), which is specifically rechargeable, attached to the basic framework (8) for supplying electricity to the image capture device (4) and/or a mobile terminal, specifically a laptop, smartphone or tablet.

4. Method according to any one of the preceding claims,
**characterised in that**,
at least one object (1) to be recorded or already recorded is or has been provided with at least one marker element (18, 19), with the aforementioned marker element (18, 19) being recorded by the image capture device (4).

5. Method according to claim 4,
**characterised in that**,
a marker element (18) with several functionally different marker element areas (18a, 18b, 18c) is used, wherein, by means of a first marker element area (18a), a distinction is made between the marker element (18) and other areas of the object (1), by means of a second marker element area (18b), the orientation of the marker element (18) is detected relative to the object (1) provided with the marker element (18) and, by means of a third marker element area (18c), specifically marker and/or object-specific information stored in the third marker element area (18c) is read.

6. Method according to claim 5,
**characterised in that**,
a marker element (18) with a rectangular, specifically square, basic form is used, wherein the first marker element area (18a) occupies an outer, specifically circumferential frame-shaped edge area of the marker element (18), the second marker element area (18b) occupies a specifically L-shaped area of the marker element (18) formed within the first marker element area (18a), and the third marker element area (18c) occupies a rectangular, specifically square, area of the marker element (18) within the second marker element area (18b).

7. Method for comparing data captured by least one vehicle-mounted assistance system (3) describing at least one object (1) and/or a specified environment (2) around the or an object (1) with reference data describing at least one object (1) and/or a specified environment (2) around the or an object (1), **characterised in that**
the reference data is or has been captured using a method in accordance with any one of the preceding claims.

8. Method according to any one of the preceding claims,
**characterised in that**,
the image capture device (4) records at least two marker elements (19) in a defined orientation and/or position to each other, which define a coordinate system, wherein the orientations and/or positions of all recorded objects (1) are defined.

9. Device for recording reference data describing at least one object (1) and/or a specified environment (2) around the or an object (1), with the aforementioned reference data being usable for comparison with data describing at least one object (1) and/or a specified environment (2) around the or an object (1) captured by at least one vehicle-mounted assistance system (3), wherein the device comprises at least one image capture device (4), which is designed or configured to capture the reference data from a bird's-eye view,
**characterised in that**,
it has a mounting device (5), which comprises a specifically roll-shaped, movement means movably mounted on a basic framework relative to a substrate and at least one pivotably mounted support arm relative to the basic framework with at least one support section forming a mounting point for the image capture device, wherein
at least one support element (11), specifically in the form of a pedestal, is attached to the support arm (9), in order to support the support arm (9) pivoted relative to the basic framework (8) on the substrate.

10. Device according to claim 9,
**characterised in that**,
the mounting device (5) comprises
an adjusting device (13) affixed to the or a specifically roll-shaped movement means (7) movably mounted on a basic framework (8) relative to a substrate, for adjustment, specifically fine adjustment of the orientation and/or position of the or a pivotably mounted support arm (9) relative to the basic framework (8) with at least one image capture device (4) mounted on a support section (10) forming a mounting point for the image capture device (4),
an image processing device attached to the basic framework (8) for processing the data recorded by the image capture device (4), and an electrical energy storage device (17), which is specifically rechargeable, attached to the basic framework (8), for supplying electricity to the image capture device (4) and/or an image processing device and/or a mobile terminal, specifically a laptop, smartphone or tablet.

11. Device according to claim 9 or 10,
**characterised in that**,
it comprises at least one marker element (18, 19) to be attached or already attached to an object (1) to be recorded or already recorded.

12. Device according to claim 11,
**characterised in that**,
a marker element (18) has several functionally different marker element areas (18a, 18b, 18c), wherein, by means of a first marker element area (18a), it is possible to make a distinction between the marker element (18) and other areas of the object (1), by means of a second marker element area (18b), it is possible to detect the orientation of the marker element (18) relative to the object (1) provided with the marker element (18) and, by means of a third marker element area (18c), it is possible to read specifically marker and/or object-specific information stored in the third marker element area (18c).

13. Device according to claim 12,
**characterised in that**,
a marker element (18, 19) has a rectangular, specifically square, basic form, wherein the first marker element area (18a) occupies an outer, specifically circumferential frame-shaped edge area of the marker element (18), the second marker element area (18b) occupies a specifically L-shaped area of the marker element (18) formed within the first marker element area (18a) and the third marker element area (18c) occupies a rectangular, specifically square, area of the marker element (18) within the second marker element area (18b).

14. Device according to one of the claims 9 to 13,
**characterised in that**,
it has at least two marker elements (19) in a defined orientation and/or position to each other, which define a coordinate system, wherein in the orientations and/or positions of all recorded objects (1) can be defined by the device.

## Revendications

1. Procédé d'enregistrement de données de référence décrivant au moins un objet (1) et/ou un environnement déterminé (2) autour de l'objet ou d'un objet (1), lesquelles données de référence sont utilisées pour le rapprochement avec des données enregistrées par au moins un système d'assistance (3) côté véhicule automobile et décrivant au moins un objet (1) et/ou un environnement déterminé (2) autour de l'objet ou d'un objet (1), dans lequel les données de référence sont enregistrées au moyen d'au moins un dispositif de prise de vues (4) en vue aérienne, dans lequel les données de référence sont enregistrées à partir d'une position de prise de vues contre, dans ou sur un bâtiment, dans lequel les données de référence sont enregistrées au moyen d'un dispositif de prise de vues (4) monté contre ou sur un dispositif de fixation (5), dans lequel le dispositif de fixation (5) est agencé contre, dans ou sur un bâtiment, en particulier un immeuble,
**caractérisé en ce qu'**on utilise un dispositif de fixation (5) qui comprend une structure de base (8) montée sur des moyens de déplacement (7), en particulier sous forme de roulettes, de façon à être mobile par rapport à un support et au moins un bras de fixation (9) monté pivotant par rapport à la structure de base (8) avec au moins une partie porteuse (10) formant un point de support pour le dispositif de prise de vues (4),
dans lequel au moins un élément de soutien (11), en particulier sous la forme d'un pied ou comprenant un pied, est fixé au bras de fixation (9), lequel élément de soutien est utilisé pour soutenir sur le support le bras de fixation (9) pivoté par rapport à la structure de base (8).

2. Procédé selon la revendication 1, **caractérisé en ce que** les données de référence sont enregistrées à partir d'une position de prise de vues contre, dans ou sur un immeuble, dans lequel on choisit une position de prise de vues contre, dans ou sur une zone d'immeuble située au-dessus d'un rez-de-chaussée, en particulier une position de prise de vues à partir d'un balcon ou d'un toit.

3. Procédé selon l'une quelconque des revendications précédentes, **caractérisé en ce qu'**on utilise un dispositif de fixation (5) qui comprend
un dispositif d'ajustement (13) fixé à la structure de base ou à une structure de base (8) montée sur des moyens de déplacement (7), en particulier sous forme de roulettes, de façon à être mobile par rapport à un support et destiné à ajuster, en particulier de manière précise, l'orientation et/ou la position du dispositif de prise de vues (4) monté sur le ou un bras de fixation (9) pivotant par rapport à la structure de base (8) avec au moins une partie porteuse (10) formant un point d'appui pour le dispositif de prise de vues (4),
un dispositif de traitement d'image fixé à la structure de base (8) et destiné au traitement des données enregistrées par le dispositif de prise de vues (4), et
un accumulateur d'énergie électrique (17) fixé à la structure de base (8), en particulier rechargeable, et destiné à l'alimentation électrique du dispositif de prise de vues (4) et/ou d'un terminal mobile, en particulier un ordinateur portable, un smartphone ou une tablette.

4. Procédé selon l'une quelconque des revendications précédentes, **caractérisé en ce qu'**au moins un objet (1) à photographier ou photographié est muni ou a été muni d'au moins un repère (18, 19), lequel repère (18, 19) est photographié par le dispositif de prise de vues (4).

5. Procédé selon la revendication 4, **caractérisé en ce qu'**on utilise un repère (18) avec plusieurs zones de repère (18a, 18b, 18c) différentes d'un point de vue fonctionnel, dans lequel on effectue la différence entre le repère (18) et d'autres zones de l'objet (1) par l'intermédiaire d'une première zone de repère (18a), on effectue la détection de l'orientation du repère (18) par rapport à l'objet (1) muni du repère (18) par l'intermédiaire d'une deuxième zone de repère (18b) et on effectue la lecture d'informations enregistrées dans une troisième zone de repère (18c), en particulier spécifiques au repère et/ou à l'objet, par l'intermédiaire de la troisième zone de repère (18c).

6. Procédé selon la revendication 5, **caractérisé en ce qu'**on utilise un repère (18) avec une forme fondamentale rectangulaire, en particulier carrée, dans lequel la première zone de repère (18a) occupe une zone marginale extérieure, en particulier sous forme de cadre périphérique, du repère (18), la deuxième zone de repère (18b) occupe une zone, réalisée à l'intérieur de la première zone de repère (18a), en particulier en forme de L, du repère (18) et la troisième zone de repère (18c) occupe une zone, réalisée à l'intérieur de la deuxième zone de repère (18b) et rectangulaire, en particulier carrée, du repère (18).

7. Procédé de rapprochement de données enregistrées avec au moins un système d'assistance (3) côté véhicule automobile et décrivant au moins un objet (1) et/ou un environnement déterminé (2) autour de l'objet ou d'un objet (1) et de données de référence décrivant au moins un objet (1) et/ou un environnement déterminé (2) autour de l'objet ou d'un objet (1), **caractérisé en ce que** les données de référence sont ou ont été enregistrées au moyen d'un procédé selon l'une quelconque des revendications précédentes.

8. Procédé selon l'une quelconque des revendications précédentes, **caractérisé en ce qu'**au moins deux repères (19) disposés l'un par rapport à l'autre dans une orientation et/ou position définie sont enregistrés par le dispositif de prise de vues (4) et définissent un système de coordonnées dans lequel les orientations et/ou positions de tous les objets (1) enregistrés sont définies.

9. Dispositif d'enregistrement de données de référence décrivant au moins un objet (1) et/ou un environnement déterminé (2) autour de l'objet ou d'un objet (1), lesquelles données de référence sont utilisables pour le rapprochement avec des données enregistrées par au moins un système d'assistance (3) côté véhicule automobile et décrivant au moins un objet (1) et/ou un environnement déterminé (2) autour de l'objet ou d'un objet (1), dans lequel le dispositif comprend au moins un dispositif de prise de vues (4) qui est réalisé ou réglé pour enregistrer les données de référence en vue aérienne,
**caractérisé en ce qu'**il comporte un dispositif de fixation (5) qui comprend
une structure de base montée sur des moyens de déplacement, en particulier sous forme de roulettes, de façon à être mobile par rapport à un support et
au moins un bras de fixation monté pivotant par rapport à la structure de base avec au moins une partie porteuse formant un point de support pour le dispositif de prise de vues,
dans lequel au moins un élément de soutien (11), en particulier sous la forme d'un pied, est fixé au bras de fixation (9) afin de soutenir sur le support le bras de fixation (9) pivoté par rapport à la structure de base (8).

10. Dispositif selon la revendication 9, **caractérisé en ce que** le dispositif de fixation (5) comprend
un dispositif d'ajustement (13) fixé à la structure de base ou à une structure de base (8) montée sur des moyens de déplacement (7), en particulier sous forme de roulettes, de façon à être mobile par rapport à un support et destiné à ajuster, en particulier de manière précise, l'orientation et/ou la position du dispositif de prise de vues (4) monté sur le ou un bras de fixation (9) pivotant par rapport à la structure de base (8) avec au moins une partie porteuse (10) formant un point d'appui pour le dispositif de prise de vues (4),
un dispositif de traitement d'image fixé à la structure de base (8) et destiné au traitement des données enregistrées par le dispositif de prise de vues (4), et
un accumulateur d'énergie électrique (17) fixé à la structure de base (8), en particulier rechargeable, et destiné à l'alimentation électrique du dispositif de prise de vues (4) et/ou d'un dispositif de traitement d'image et/ou d'un terminal mobile, en particulier un ordinateur portable, un smartphone ou une tablette.

11. Dispositif selon la revendication 9 ou 10, **caractérisé en ce qu'**il comprend au moins un repère (18, 19) placé ou pouvant être placé sur un objet (1) à photographier ou photographié.

12. Dispositif selon la revendication 11, **caractérisé en ce qu'**un repère (18) comporte plusieurs zones de repère (18a, 18b, 18c) différentes d'un point de vue fonctionnel, dans lequel on effectue la différence entre le repère (18) et d'autres zones de l'objet (1) par l'intermédiaire d'une première zone de repère (18a), on effectue la détection de l'orientation du repère (18) par rapport à l'objet (1) muni du repère (18) par l'intermédiaire d'une deuxième zone de repère (18b) et on effectue la lecture d'informations enregistrées dans une troisième zone de repère (18c), en particulier spécifiques au repère et/ou à l'objet, par l'intermédiaire de la troisième zone de repère (18c).

13. Dispositif selon la revendication 12, **caractérisé en ce qu'**un repère (18, 19) a une forme fondamentale rectangulaire, en particulier carrée, dans lequel la première zone de repère (18a) occupe une zone marginale extérieure, en particulier sous forme de cadre périphérique, du repère (18), la deuxième zone de repère (18b) occupe une zone, réalisée à l'intérieur de la première zone de repère (18a), en particulier en forme de L, du repère (18) et la troisième zone de repère (18c) occupe une zone, réalisée à l'intérieur de la deuxième zone de repère (18b) et rectangulaire, en particulier carrée, du repère (18).

14. Dispositif selon l'une quelconque des revendications 9 à 13, **caractérisé en ce qu'**il comporte au moins deux repères (19) qui sont disposés l'un par rapport à l'autre dans une orientation et/ou position définie et qui définissent un système de coordonnées dans lequel les orientations et/ou positions de tous les objets (1) enregistrés peuvent être définies par le dispositif.
